# EUROPEAN PATENT APPLICATION

(11) **EP 0 819 918 A2**
(43) Date of publication of application: **21.01.1998**
(21) Application number: 97112129.8
(22) Date of filing: 16.07.1997
(51) Int. Cl.: G01F 1/00

(54) **System for the regulation of a fluid**

(30) Priority: 16.07.1996 IT TO960616
(71) Applicant: ELTEK S.p.A., I-15033 Casale Monferrato (Alessandria) (IT)
(72) Inventor: Gadini, Costanzo, Casale Monferrato (AL) (IT); Perucca, Giovanni, Motta de' Conti (VC) (IT)
(74) Representative: Dini, Roberto, Dr. Ing.

(57) **Abstract**

A fluid control system is described, in which a control device is arranged for the shutting of a fluid passage, so as to obtain a regulation of the pressure.

According to the invention, said control device (DR) is able to be integrated, or inserted, within a conduit (2') making up part of a different hydraulic device of the type commonly used in the household appliance field, said conduit realizing therefore an external shell of said control device (DR). The use of said device is provided for reducing the risks connected to high pressures in the pipes and for overcoming the noise due to the conveyance of the fluid.

## Description

The present invention refers to a fluid control system for hydraulic circuits, particularly appropriate for being applied to water mains and/or liquid supply devices of washing machines.

It is known that, in the domestic appliance sector, liquid supply or feeding pipes, and the devices associated to such (valves, safety devices) constitute a critical element, due to the constant possibilities of leaks; such leaks can for instance be caused by tube breakages, due to excess pressure of the liquid to be controlled or by the so-called water hammer; another critical element is that of the functional noise of such devices, during the conveyance of the liquid, such problem being particularly felt for domestic usage.

It is also known that, with the aims of avoiding similar problems in other sectors, control devices are known, to be applied to pipes in which fluids are conveyed. Such fluid controls are realized in a vast number of solutions, due to the different nature of the fluid to control, be it liquid or gas, and to the different pressure and flow rates.

For instance, controllers are known equipped with retro-action devices, within which the pressure of the fluid acts upon a sensor of various types (piston, membrane, diaphragm, bellows, etc.); such sensors provide for commanding in various ways the shutting of the aperture of the pipe in which the fluid is conveyed, which with a partial occlusion determines a load loss and therefore a decrease of the pressure downstream from the controller.

In such uses, control devices are known that make use of a reference pressure, usually obtained from the surrounding pressure by way of a passage in communication with the exterior of the device, which is compared to the pressure of the incoming fluid so as to manage the aforementioned shutting of the conduit.

Said controllers do however have the drawback of offering, in the case of failures of the device, a path of the fluid for leaking, by way of the actual passage that give the surrounding pressure; such application of the known devices in the sector of washing machines is thus not recommended, due to the fact that a breakdown of such a device could cause flooding of the domestic environment.

Said controllers are not apt at being completely inserted in the fluid path that is to be controlled; i.e. in the fluid passage pipe, thus avoiding any contacts with the exterior. This means that the arrangement of appropriate containing bodies is necessary, to be associated to the pipes in a joint section; this characteristic would also be in contrast with the needs of the domestic electrical appliance sector, as there is an increasing need to reduce production costs and the dimensions of the various elements.

With the latter requirement in mind, one must consider that the level of pressure used in the sector of washing machines would implicate, according to the known art, the use of a controlling membrane being of a large surface area, which would naturally effect the dimensions of the final device.

It is also known, in dishwashing and laundry washing machines, the use of means apt at avoiding floods due to failures of the machine; such a failure, as said, could be a burst supply pipe, due to sudden pressure increases.

With the aim of avoiding such drawbacks safety anti-flooding devices are normally used; such devices require the use of fluid supply pipes being made up of at least two concentric tubes wherein, in the case of the internal tube bursting, the water loss is conveyed by the external tube to an appropriate container; in such container appropriate sensor means are arranged apt at commanding the closure of one or more valves, arranged up-stream from the supply pipe.

From the Italian utility model n° 208.056 a safety anti-flooding device is known in which the use of an automatic pressure control device is used, which is able to decrease the pressure of the water coming from the water mains and to bring it from a value of approximately 10 bar to value from between 0,5 and 1,0 bar.

In general, the supply tube, so as to be connected to the water mains with a pressure of around 10 bar, has to able to support an internal pressure of at least 20 bar, and therefore with a safety ratio in the range of 2/1; in the case of applying the device according to the mentioned utility model, the safety ratio is therefore maximized from a ratio of 2/1 to a ratio of between 20/1 and 40/1: the use of the mentioned pressure control thus avoids the necessity of excessive measures against the bursting of the supply tube, as the normal resistance of such tube (10 bar) is more than sufficient for the reduced pressure determined by the control device (0,5 and 1,0 bar).

The device of the Italian utility model n° 208.056 does however have the drawback of using the previously mentioned surrounding pressure as a reference, with the problems relating to such kinds of applications such as failures and leaks. Another substantial drawback of such device is that it has to be arranged in an appropriate hydraulic element, comprising a suitably shaped body, with chambers being of dimensions and diameters far greater than those of normal tubes or standard joints used in the field of household appliances (in such fields, the so-called joints of the type 3/4 GAS are used, having an internal diameter of around 20 millimeters).

Similar problems of dimensions are generally encountered in all devices used in the domestic household appliance sector, usually equipped with joints of the type 3/4 GAS, or having smaller passage sections.

The aim of the present invention is that of overcoming the mentioned drawbacks and of indicating a fluid control system that is both of economical realization and of very contained dimensions, and therefore apt at being inserted directly in hydraulic devices commonly used in the electrical appliance sector, without modifying the same, which consents an efficient fluid flow control and a reduction of the functional noise, and that allows for obtaining an indirect level of safety against possible flooding.

These aims are attained according to the present invention by a system for the control of a fluid having the feature of the annexed claims.

The characteristics and advantages of the present invention shall result in being clear from the following detailed description and annexed drawings, supplied purely as an explanatory and non-limiting example, wherein:
- Fig. 1 illustrates a schematic view of a possible embodiment of the control system according to the invention;
- Fig. 2 illustrates a schematic plan view of the system of Fig. 1;
- Fig. 3 illustrated an exploded view of a particular of the control system according to the present invention;
- Fig. 4 illustrates a sectional view of the system of Fig. 1 according to the axis C-C;
- Fig. 5 illustrates an enlarged view of an element of the particular of Fig. 3;
- Fig 6 illustrates a second view of an element of the particular of Fig. 3;
- Fig. 7 illustrates a section of the control system of Fig. 2 according to the axis A-A, in a first working condition;
- Fig. 8 illustrates a section of the control system of Fig. 2 according to the axis B-B, in the same working condition of Fig. 7;
- Fig. 9 illustrates a section, similar to that of Fig. 7, of the control system of Fig. 1 in a second working condition;
- Fig. 10 illustrates a section of the control system of Fig. 1 in a third working condition;
- Fig. 11 illustrates a schematic view of a second embodiment of an element of the system according to the present invention;
- Fig. 12 illustrates a section according to the axis D-D of the variant of Fig. 11;
- Fig. 13 illustrates a section according to the axis E-E of the variant of Fig. 11;
- Fig. 14 illustrates a section according to the axis F-F of the variant of Fig. 11;
- Fig. 15 illustrates a schematic view of a particular of the variant of Fig. 11;
- Fig. 16 illustrates a schematic view of a particular of the variant of Fig. 11;
- Fig. 17 illustrates a section of a first possible application of the present invention,
- Fig. 18 illustrates a partial sectional view of a second possible application of the present invention.

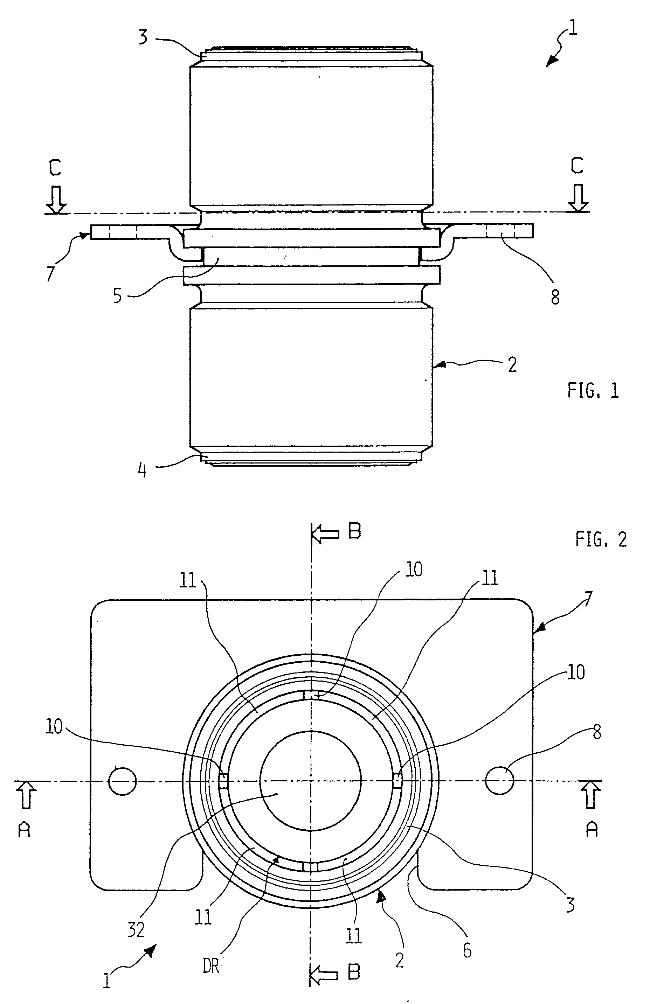

In Figures 1 and 2 schematic views of a possible embodiment of a fluid control system according to the invention are illustrated.

In such embodiment the control system, indicated as a whole with 1, comprises a tubular body 2 within which a fluid control device DR is inserted, described in detail in the following. The body 2 is equipped at its extremities with hydraulic connectors, indicated respectively with 3 and 4, which allow for its connection to two tubes or pipes, not illustrated in the figure; the connectors 3 and 4, equipped with screw threads, are of the type 3/4 GAS, commonly used in hydraulic circuits for electrical appliances.

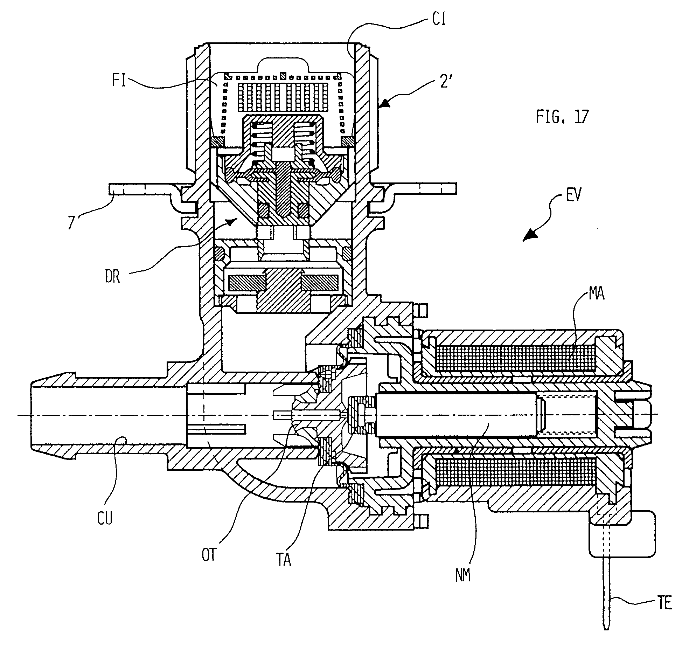

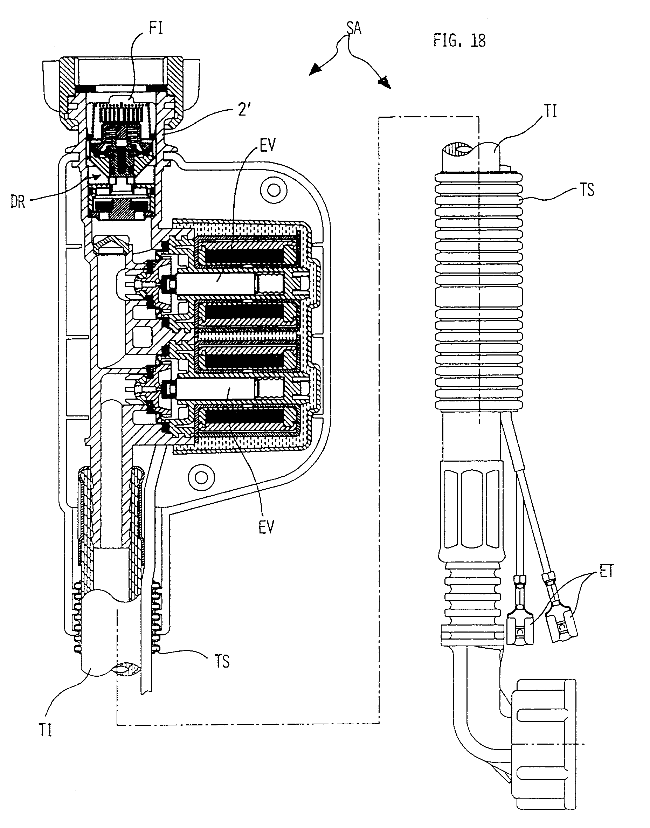

In the case illustrated in Figures 1 and 2, the body 2 constitutes in practice a joint or union, but it can also be considered as a general portion of hydraulic piping (as will be clear from an exam of figures 17 and 18).

As can be seen, in the median section of the body 2 a seat 5 is defined, in which a relief 6 of a general bracket is engaged, provided with suitable holes 8 for the fixing of the body 2 to an household appliance, not illustrated.

As said, within the body 2 a fluid control device DR is housed, which together with the body 2 constitutes the control system 1 according to the invention.

As can be seen in Figure 2, the device DR remains at least in part spaced from the internal wall of the body 2, by way of appropriate spacers 10, in such a way, therefore, that between the body 2 and the device DR passages 11 are defined, through which fluid can pass.

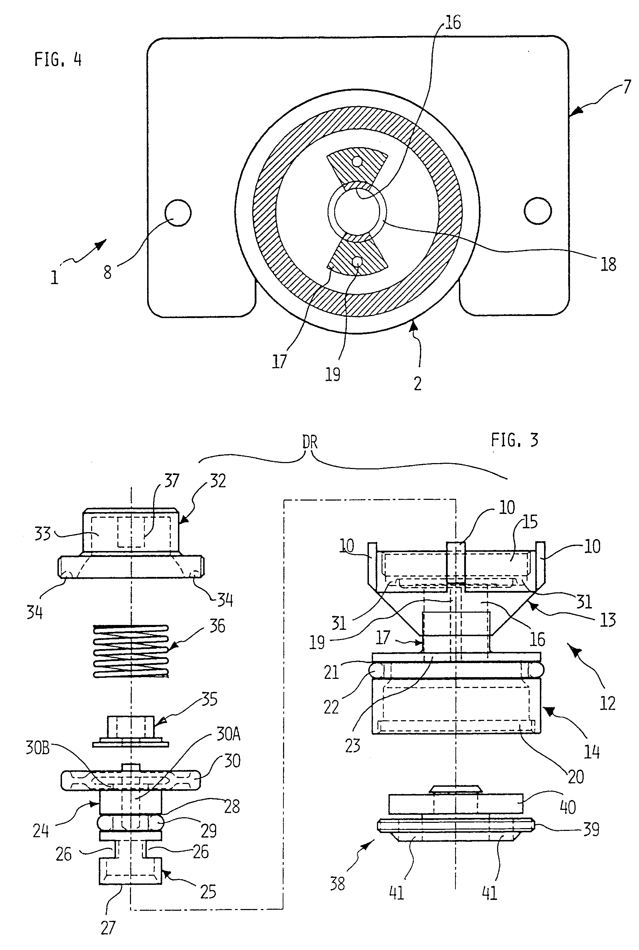

In Figure 3 the control device DR, to be housed within the body 2, is represented through an exploded view.

The device DR is made up of a main body 12, of which an upper part 13 and a lower part 14 can be identified.

In the upper part 13 a chamber 15 and an internal seat 16 are defined 17 indicates one of the two columns (as can be better seen from figure 4) that unite the upper part 13 to the lower part 14; said columns 17 define, between the parts 13 and 14, two open passages 18, opposite to each other (as also seen in figure 4), and have internal channels 19. Said channels 19 place the chamber 15 in communication with a chamber 20 obtained in the lower part 14 of the body 12.

As is seen, the part 13 has inclined external walls, so as to improve the fluid dynamics of the device; the spacers 10 can also be noted from the figure.

The lower part 14 has a circular seat for the housing of a water-tight element 22, such as an O-ring, apt at assuring the water-tightness between the lower part 14 and the body 2 of Figure 1; in such a way fluid losses are avoided, said fluid being thus forced to penetrate the interior of the device and to undergo a controlling action; in particular, the lower part 14 has a central aperture 23, arranged in correspondence to the passages 18, therefore, the liquid coming through the passages 11 of Figure 2 can flow (in function to the position of a shutter described in the following) through the passages 18 and said central aperture 23, and thus reach the chamber 20.

In the seat 16 a mobile piston 24 is destined to be inserted, at the lower extremity of which a shutter 25 is arranged, destined to operate, substantially, in correspondence of the passages 18, thus realizing a kind of valve.

In the example herein supplied, the shutter 25 is made up of a hollow body, which has two lateral entrance openings 26 and a lower exiting opening 27; slightly above the shutter 25, the piston 24 has a housing seat 28 of a water-tight element 29, such as an O-ring; such element 29 is apt at avoiding fluid losses between the wall of the seat 16 and the piston 24 being mobile with said seat 16. The passages 18 have a sectional passage being equal to or greater than the section of the exiting opening 27 of the shutter 25.

In its upper part, the piston 24 has an elastic membrane 30, a first portion of which 30A is housed within an appropriate cavity of the piston 24; a second portion 30B of the membrane 30 results in being inserted in a circular seat also defined in the piston 24.

When the piston 24 is inserted in the seat 16, the external profile of the elastic membrane 30 becomes employed within a seat 31; as will be seen, the membrane 30 is in fact destined to constitute the lower wall of a control chamber (15A), internally defined within the chamber 15.

With 32 a cap is indicated, which is screwed, or fixed (for instance by ultrasonic soldering), to the upper part 13 of the body 12, in this way defining the upper wall of the said control chamber (15A).

The cap 32 has an internal cavity 33 and is equipped with a peripheral seat 31: in this way, the external profile of the elastic membrane 30 remains constrained in the two seats 31 and 34, thus sealing in a watertight way the control chamber (15A) and its content (gas or fluid) under an established pressure.

Before fixing or closing the cap 32, in the chamber 15 (or if preferred 15A) a washer 35 is also inserted, which rests upon the elastic membrane 30 and as a result on the piston 24. A spring 36 is then housed under compression between said washer 35 and the cap 32. As can be seen, a relief 37 is defined on the cap 32 apt at being employed in the washer 35, so as to take on the function of an abutment of the piston at the end of its stroke, so as that it does not lose its seat or the membrane 30 becomes damaged due to excessive stretching.

Finally, in the lower part 14 of the body 12, substantially in correspondence with the chamber 20, a flow controller 38 is arranged, comprising a body 39, to which an elastic membrane 40 is associated equipped with lower passages 41, which allow for the drainage of the fluid from the body 12; such flow controller is of the known type and use, and therefore will not be described in detail in the following.

In Figure 4 a section according to the axis C-C of the control system of Figure 1 is illustrated, from which the channels 19 obtained in the columns 17 can be clearly seen, the circular seat 16 in which the piston 24 moves and the passages 18 together with which the shutter 25 operates.

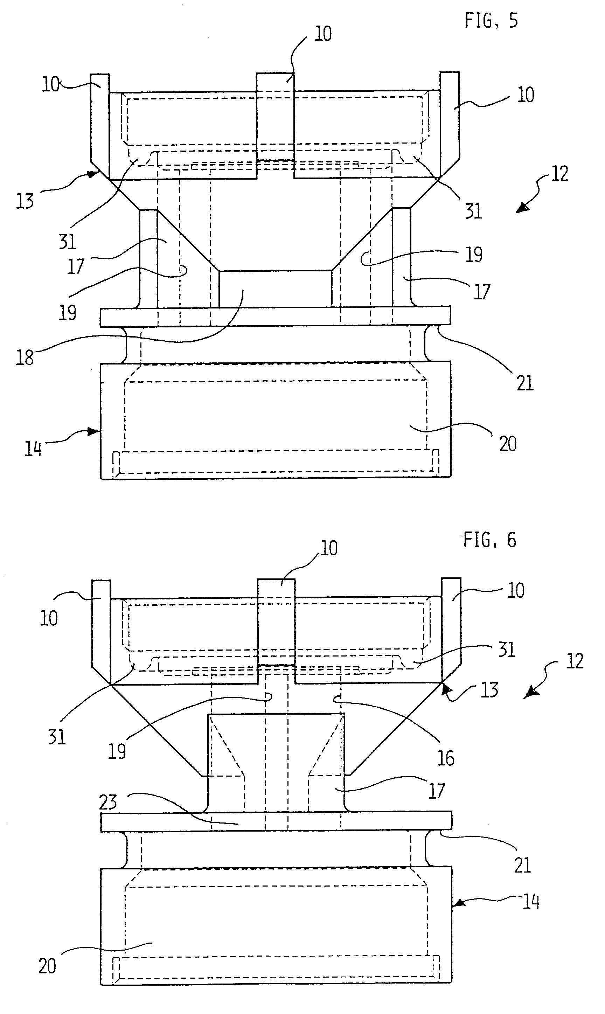

In Figure 5 an enlarged view of the body 12 is illustrated, at an orthogonal angle with respects to that of Figure 3. In such it a figure is possible to see how the body 12 is realized as a single piece, for instance by molding of a plastic material, which defines the upper part 13 and the lower part 14, which are both connected by way of the columns 17. Between the columns 17 and the parts 13 and 14, the passages 18 are delineated, which supply in the manner described above the chamber 20. The sections of the channels 19 are also visible, arranged within the columns 17, which place the chamber 20 of the lower part 14 in communication with the chamber 15 of the upper part 13 where, as already seen in Figure 3, the membrane 30 is housed.

In Figure 6, the body 12 is illustrated in the same view of that of Figure 3, but in a larger scale for a clearer understanding.

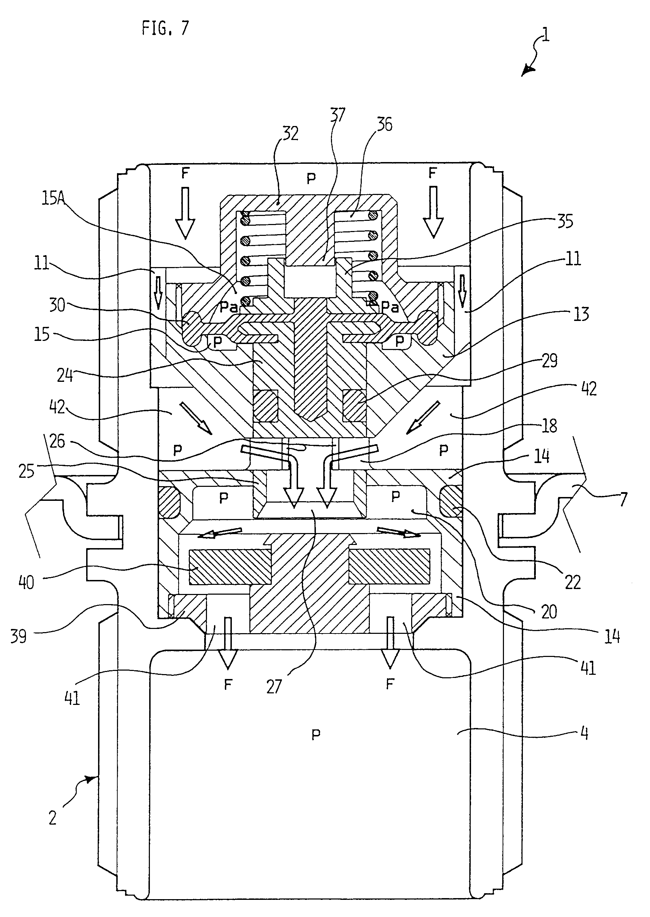

Figure 7 represents a section of the fluid control system 1 in a rest position and/or in a non intervening position, whenever the pressure of the liquid is less than the working pressure.

In said figure it is noted how the elastic membrane 30 is employed in the appropriate seats (31 and 34) delineated by the cap 32 and the body 12, so as that a watertight seal of the cited control chamber 15A is realized, constituted by the elastic membrane 30 itself and by the internal cavity (33) of the cap 32.

Between the body 12 and the body 2 the previously mentioned passages 11 are defined (Figure 2), through which the fluid is able to reach a zone 42, being in-between the upper part 13 and the lower part 14 of the body 12; from said intermediate zone 42 the fluid can penetrate the passages 18 which, in the rest position, result in being in line with the entrance openings 26 of the upper part of the shutter 25; through the internal cavity of the shutter 25 the fluid is able to reach, by way of the exiting opening 27, the chamber 20 and therefore the flow controller 38 arranged below. The passages 41 of the controller 38 thus supply the fluid to a pipe arranged below, which represents the exit of the fluid control system 1, i.e. the lower hydraulic connector 4.

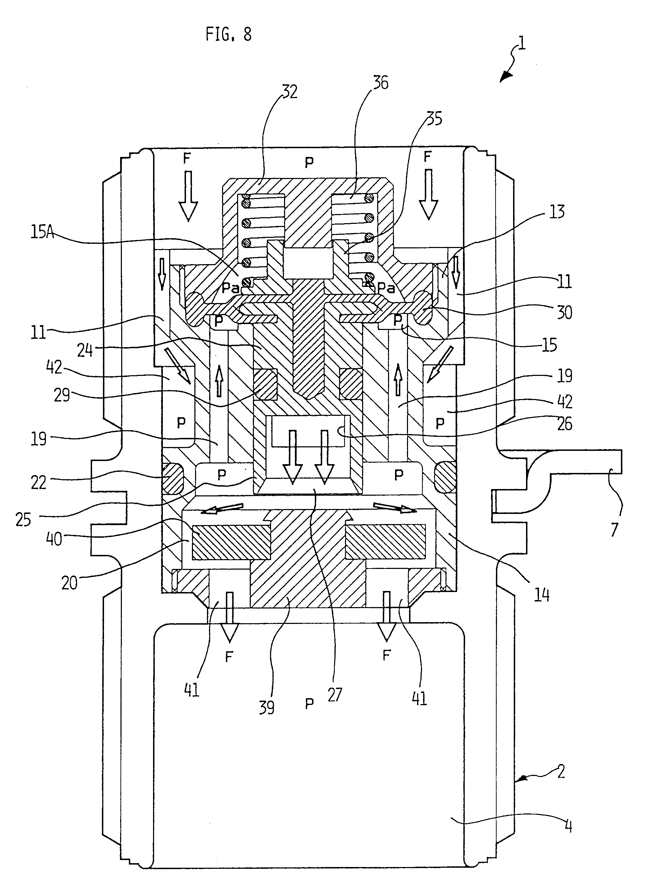

In Figure 8 a section of the fluid control system according to the axis B-B of Figure 2 is illustrated, being orthogonal to the axis A-A. From such section the two channels 19 are clearly visible, which place the chamber 20 in communication with the surface of the elastic membrane 30, which as said constitute the lower part of the control chamber 15A. It is also possible to clearly see one of the entrance openings 26 and the exiting opening 27 of the shutter 25.

The functioning of the fluid control system 1 is the following.

The incoming fluid F from the upper connector (3) is free to flow through the passages 11 and to reach the zone 42; from such zone, the fluid can pass to the chamber 20, within which the controller 38 operates, by way of the opposite passages 18 and the openings 26 and 27 of the shutter 24 (it is to be noted that the thrust of the two flows conveying the passages 18, and in the openings 26, is reciprocally nullified, in virtue of the opposite arrangement of the same).

The incoming fluid F is under pressure P. The control chamber 15A in the phase of constructing the fluid control device DR, is sealed in the above mentioned way at a predetermined pressure Pa, which is generally that of the surrounding pressure. In the rest position of Figures 7 and 8, that corresponds to a low fluid pressure, the pressure P is brought back to the lower surface of the elastic membrane 30 by way of the channels 19; such pressure P determines a force on the membrane 30, which is not however sufficient to overcome the force of the spring 36; this being also due to the elastic reaction of the membrane 30 and of the force of the pressure Pa of the control chamber 15A on the membrane 30.

More in detail, with pressure P nullified, in order to maintain the membrane 30 in the rest position (i.e. with the shutter open), the force exercised by the pressure Pa on the membrane 30 is sufficient, while the force exercised by the spring 36 by way of the washer 35 on the membrane 30 and on the piston 24 has the aim of establishing the working point of the device DR.

The shutter 25 therefore remains in the rest position, i.e. in its lower most position so as that the passages 18 and the entrance openings 26 coincide, and therefore the section of passage is at its maximum. The whole control system therefore is at the pressure P, with the exception of the control chamber 15A. The flow controller 38 operates on the other hand by way of the action of the fluid F on the elastic membrane 40, which, upon bending, varies the passage section of the passages 41, determining a decrease in the water load.

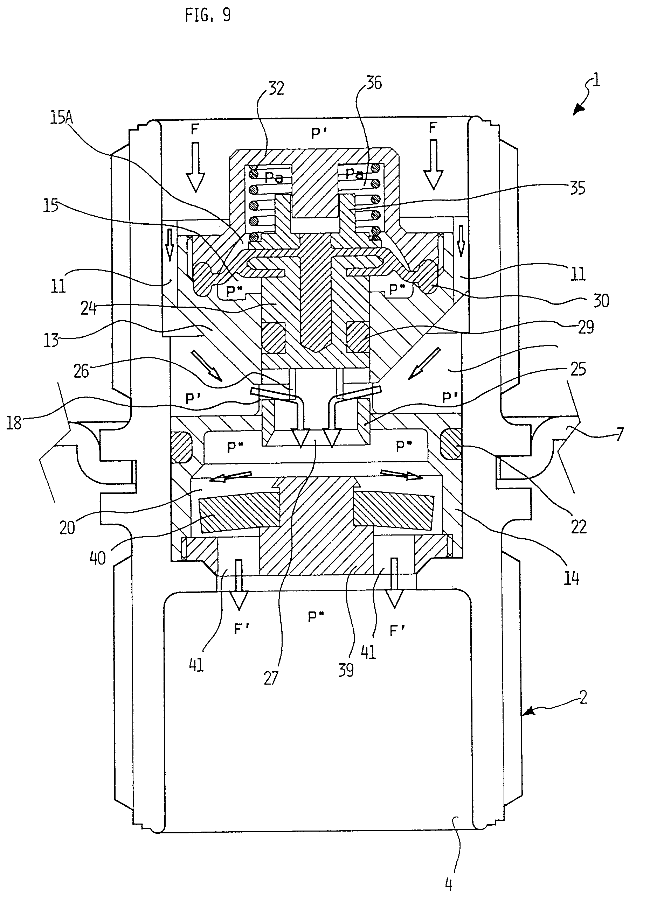

When (figure 9) the fluid F reaches a pressure P' being of such to overcome the force of the spring 36, of the elastic reaction of the membrane 30 and of the pressure Pa, the membrane 30 bends, thus increasing the compression of the spring 36 and causing the raise of the piston 24 and thus the shutter 25: a partial blocking of the passages 18 is thus determined, being proportional to the bending of the elastic membrane 30.

The reduction of the passages 18 determines a load loss, with a consequent reduction of pressure down stream from the shutter 25, especially in the channels 41 and in the chamber 20 of the flow controller 38.

Accordingly, through the channels 19, the pressure reduction is transferred to the elastic membrane 30, therein realizing a dynamic equilibrium between the force exercised by the reduced pressure on the membrane 30, which is registered at a pressure P'', and the force of the spring 36, of the elastic reaction of the membrane 30 and of the pressure Pa.

Further increases of the pressure P' of the fluid F determine a notable deflection of the elastic membrane 30, and thus a greater lifting of the shutter 25 by way of the motion of the piston 24, and a greater reduction of the passages 18, thus determining a consequent increase of the load loss and the maintenance of the reduced pressure P'' at a constant value.

The fact that the fluid F is able to penetrate the shutter by way of one or more lateral openings or holes (26), being perpendicular in relation to the direction of the exiting liquid from the same, means that the upward and downward forces determined by the high pressure of the incoming fluid are nullified; therefore, the pressure of the fluid to be controlled does not contribute in determining the opening of the shutter (i.e. its downward movement); it is however the pressure of the liquid exiting the shutter (by way of 27), already controlled, that can determine a closing force of the shutter.

It is to be noted therefore that the pressure tends to act in isostatic conditions also upon the shutter 25, or however in such a way as to operate in closure of the shutter 25, rather than in opening.

The use of a shutter 25 of this type is particularly advantageous inasmuch it allows the use of an elastic membrane 30 being of a smaller surface compared to conventional pressure controllers. In other words, as the pressure exercised by P' on the shutter 25 is almost null, the pressure P'' brought back by way of the channels 19 to the elastic membrane 30 requires a smaller surface for generating a sufficient force for placing the piston 24 in motion.

In any event, the conditions are such that, due to the use of the hollow shutter 25, the fluid provokes forces on the surface of said shutter 25 which, may also, cooperate with the closing force of the piston 24 exercised by the pressure P'' that acts upon the membrane 30.

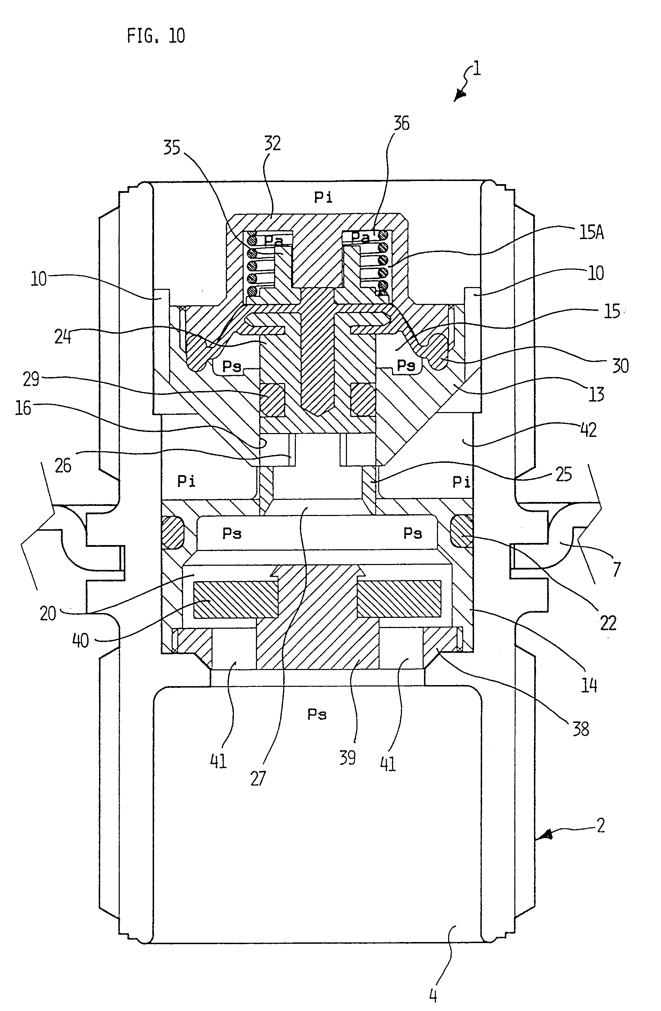

In Figure 10 the total closure condition of the device DR is illustrated. Such condition comes into being at a predetermined value of the pressure Pi, for which the movement of the shutter 25 is such so as to determine the complete blockage of the passages 18. The pressure remains stable at a predetermined constructive parameters both in the channels 19 and in the chamber 20 and in the pipes 41 and 4, i.e. in the part of the hydraulic circuit being down stream from the shutter 25. Such closure condition usually occurs in cases in which down stream from the shutter 25 a closure of the hydraulic circuit is encountered, for instance due to the closure of a solenoid valve (as in the embodiment illustrated in the section of Figure 17), in such a case the entire portion of the hydraulic circuit found down stream from the shutter 25 is maintained at a reduced pressure Ps (for instance 1 bar) compared with the pressure of the mains (for instance 10 bar), rather than it also reaching the mains pressure with the consequent risk of pipe break.

So as to increase the watertightness, particularly in the condition wherein the shutter 25 is completely closed, the insertion of elements can also be provided, apt at assuring the watertightness in the closure zone of the shutter itself so as to prevent eventual losses, that would effect the mains pressure as well as the chamber 20 and the pipes 41 and 4 found down stream from the shutter 25.

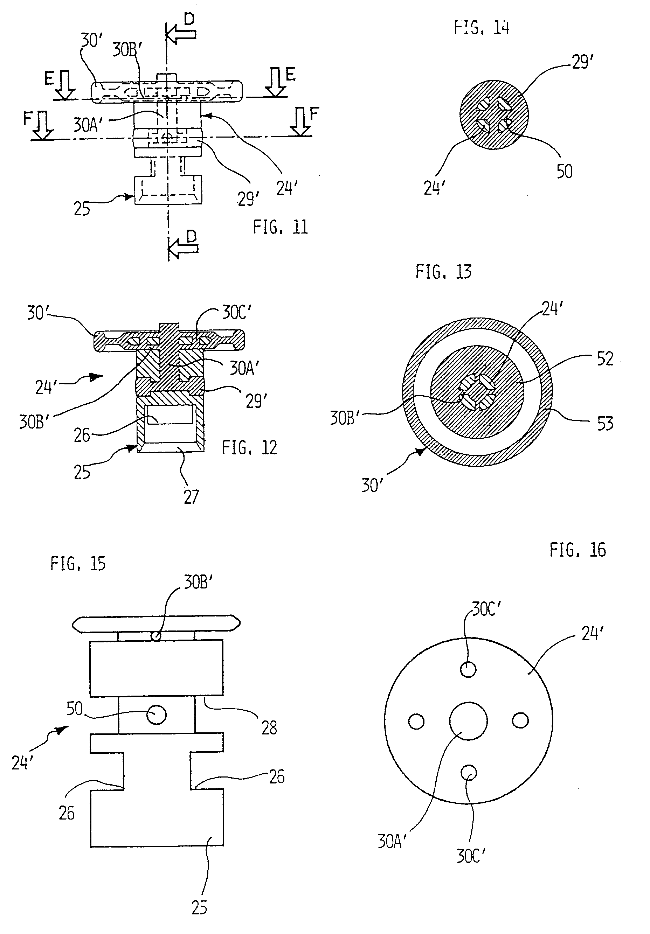

In Figures 11-16 a second possible embodiment of a particular of the fluid control system 1 is illustrated; in accordance with such variant, a piston is provided 24', comprising an elastic membrane 30' and an intermediate watertight element 29', of similar functions as the membrane 30 and to the element 29 of Figure 3.

Said membrane 30' in this case is jointly molded with the piston 24', with considerable advantages both for the molding process and the structural rigidity of the union between the piston 24' and the membrane 30'. A further modification realized on such second embodiment of the piston is constituted by the fact that the membrane 30', apart from the main pressure control functions, takes on, by way of its watertight element 29' the functions carried out by the watertight element 29 illustrated in Figure 3, i.e. to prevent losses between the piston 24' and the seat 16. In other words, therefore, in the case of the variant of Figures 11-16, the membrane 30' and the watertight element 29' are realized as a single piece, which is over-molded in relation to the piston 24'.

In the section of Figure 12 it can be seen how the material comprising the membrane 30' extends inside the piston 24', penetrating through appropriate channels 30A', 30B' and 30C'; it can be seen how the material constituting the membrane 30', penetrating the central channel 30A', is able to flow outwards, through the channels (50, Figure 15) on the groove (28) of the piston 24' thus realizing the watertight element 29'.

The membrane and/or the intermediate watertight element can therefore be realized with particular advantages through a process of over-molding respects the piston. Said process consists of molding the piston, with the shutter, which is then inserted in another mold where the membrane and/or the watertight element are over-molded; as an alternative, the piston can also be molded simultaneously with the other mentioned elements.

In Figure 13 the section of the membrane 30' can be seen, similar in this respect to the elastic membrane 30 of Figure 2. Said membrane 30' comprises a central ring 52 and an external ring 53. The central ring 52 is bound to the piston 24' by way of the penetration of the membrane 30' in the channels 30B', obtained in the piston 24' during its molding process. In this way the union between the membrane 30' and the piston 24' results in being further improved, improving the rigidity of the system, i.e. so as that the membrane can not become displaced from the piston when under the stress of the pressure. The external ring 53 of the membrane 30' is apt at being employed in the seats 31 and 34 illustrated in Figure 3.

Figure 14 illustrates the section of the watertight element 29' similarly employed between channels 50 of the piston 24'. In Figure 15 on the other hand, the piston 24' is illustrated that is provided with one of the channels 30B', through which the material for the molding of the elastic membrane 30' exits. As said, through the channels 50, in the groove 28 the material passes apt at realizing the watertight element 29'. In Figure 16 a plan view of the piston 24' is illustrated, in which four channels 30C' and the channel 30A' can be seen, through which the material for the molding of the elements 30' and 29' is injected in the pisto24'.

In Figure 17 a second possible application of the fluid control system according to the invention is illustrated. As is seen, in this case the device DR results in being inserted in the body of a solenoid valve EV of the known type.

In said figure it is noted how the device DR is directly inserted within the inlet conduit CI of the body 2' of the solenoid valve EV, which has the same internal diameter and section as the body 2 of Figure 1. The outlet conduit CU, connected for instance to a tub of a washing machine, not illustrated, is controlled by the actual solenoid valve, which comprises an electromagnet MA constituted by a bobbin, a mobile core MN, a cap TA and a shutter OT.

Electrical terminals TE energize the electromagnet MA when it is necessary to allow the passage of liquid to the outlet conduit CU, causing the reversal of the mobile core NM and of the tap TA, and consequently the opening of the shutter OT.

It is to be noted once again that the fluid control device DR is directly inserted in the inlet conduit CI of the solenoid valve EV. Therefore adaptations of the conduits are not necessary, thus the control system according to the invention is proposed as a universal system for small diameter hydraulic pipes; this results in being particularly advantageous if one considers the case of a bulky device such as the solenoid valve EV, the use of a larger controller could cause series problems of space for its mounting and may also compromise the use of the solenoid valve itself

It is noted how, in the case of Figure 17, up stream from the device DR a filter FI of standard dimensions is arranged. It is also to be noted that in this case the cap 32 of the device DR is appropriately shaped and sized, so as to recuperate space with the aim of allowing the insertion of a filter up stream from the device.

In order to exemplify the advantages of the invention, with merits to its direct applicability to standard hydraulic pipes (3/4 GAS), in Figure 18 a sectional view and a schematic view are illustrated of the fluid control device DR, inserted in a supply device SA being part of an anti-flooding safety device; such device SA, of a known type, comprises two solenoid valves in series EV (of the type normally closed), an external tube TS, an internal tube TI and electrical terminals ET connected to a control element, not illustrated. In the case of pipe TI breakage, during normal functioning, the water remains confined within the external pipe TS and conveyed in a known way towards a collection tank, present within the electric appliance and therefore not illustrated, where appropriate liquid sensor means are provided. In the case of losses detected by way of said means, the controller provides, by way of the terminals ET, for interrupting the power to the solenoid valves EV, closing the circuit up stream from the loss.

Use of the fluid control device DR, which is arranged at the mouth of the anti-flooding safety device, assures that the pressure remains reduced, independently from the functioning of the solenoid valves EV and that the system is therefore intrinsically safer compared to the known art, being as that the internal pipe operates under a pressure which certainly lower than that commonly used (usually pressure in the range of 10 bar).

From the given description the characteristics of the fluid control system subject of the present invention result in being clear, as do its advantages.

In particular, from that described above, it results in being clear how the system according to the present invention is able to allow for the realization of a pressure controller, which can eventually be joint to a flow or supply controller, being of small dimensions, of such to be easily integrated to other existing devices, such as a solenoid valve or supply pipes and fluid controllers.

For instance, it has been seen how the device DR can be inserted in a watertight tube having a diameter of approximately 20 mm or less, thus remaining completely immersed in the liquid that it conveys.

Another main advantage of the invention is constituted by the provision of a watertight control chamber which, eliminating the necessity of pipes being in communication with the external surrounding pressure of the hydraulic circuit, produces two advantageous consequences:
- the possibility of insertion in standard solenoid valves, without the necessity of adaptations or modifications;
- the increased reliability against risks of flooding in the case of breakage of the elastic membrane, due to the fact that there are no pipes conveying fluid to the external surroundings.

Furthermore, the fluid or gas (usually air) contained in the watertight control chamber (15A) at a predetermined pressure, when compressed by the closing movement of the piston, increases its pressure and aids the spring in opening the shutter and/or in controlling the working point.

A further advantage is constituted by the use of a shutter configured so as to reduce the force determined by the fluid on the shutter itself compared to for instance the use of a typical conic shutter, or of a shutter having a geometry and areas of such to be effected by the pressure determined by the incoming fluid being under high pressure. This resulting in:
- a lower force that the pressure of the incoming fluid opposes against the closure of the shutter; this allows the use of an elastic membrane of smaller dimensions for assuring a sufficient thrust in the complete working range (for instance 0,5 - 10 bar);
- a lower level of sensibility against eventual lime scale deposits, that could hinder the closure of the shutter.

Finally the use of a pressure controller together with the described supply controller allows for overcoming, due to the reduced and constant pressure, the typical noise of the valves for the electrical appliance sector, inasmuch a fluid under high pressure is the cause of extreme vibrations of the control membrane of the supply controller. In providing the supply controller with a fluid under a reduced pressure the vibrations are considerably limited and as a result the noise is overcome. Similar effects can also take place over the entire hydraulic circuit.

Moreover, the fact that the pressure undergoes a reduction in every functioning condition means that occurrences of the so-called water hammers are reduced, and the consequent risks of burst of broken pipes down stream from the device DR.

The fact that the control device DR allows for reducing the pressure down stream from its point of insertion in the tubing determines important practical advantages.

For example, in the case of a use such as that illustrated in Figure 17, it is clear that the solenoid valve EV, even if connected to a normal domestic water mains supply, could be of the type used in conditions of low liquid pressure: in other words the solenoid valve EV, even with an incoming pressure of 10 bar, could be of the type used for controlling lower pressures (for instance only 1-2 bar). The electromagnet of said valves for low pressures, being realized for developing reduced magnetic forces, is of smaller dimensions compared to the solenoid valves provided for controlling the mains pressure, and therefore also of lower costs, with clear advantages.

The same can also be said for the tubes or pipes used down stream from the device DR (for instance in the case of applications of the type illustrated in Figure 18); it is in fact clear that, due to the reduction of the pressure operated by the device DR, such tubes or pipes may have resistance and watertight characteristics being lower than those normally used for such applications, with obvious advantages of an economical nature.

A further advantage of the invention is constituted by the fact that the various components of the device DR (already equipped with the eventual watertight elements) can be assembled in a very easy manner, inserting them one after the other from the same side of the pipe in which the device has to operate; regards this point it is noted that the coupling of the various elements of the device DR can be of the rapid type, with snap and/or screw joints.

Finally the economic realization of the proposed solution must be considered, inasmuch the device DR is of a relatively simple construction from the productive point of view and does not require the external casing as is usual with the known art, being as that it is directly inserted in an existing pipe.

It is clear that numerous variants are possible by the man of the art to the fluid control system described as an example, without for this departing from the novelty principles inherent in the inventive idea, as it is also clear that in a practical embodiment the forms of the particulars illustrated may be different, and may be substituted with technically equivalent elements.

For instance it is clear that the fluid controller could be different from that previously illustrated with 39, still remaining however with its particularly advantageous pairing with the device DR.

## Claims

1. Fluid control system, in which a control device for the shutting of a fluid passage (18) is provided, so as to obtain a regulation of the pressure, characterized in that said control device (DR) is designed for being integrated, or inserted, within a conduit (2) making up part of a hydraulic device of the type and/or dimension of those commonly used in the household appliance field, said conduit in particular realizing an external shell of said control device (DR).

2. System, according to claim 1, characterized in that said control device (DR) comprises retro-active means (24,25,30) which act upon said passage (18), said retro-active means (24,25,30) being governed by the comparison of the pressure (P) of the fluid with a reference pressure (Pa) being present inside a watertight chamber (15A).

3. System, according to claim 2, characterized in that said control device (DR) comprises a body (12,32) in which said watertight chamber (15A) is integrated, said body (12,32) resulting in being completely immersed in the fluid to be controlled.

4. System, according to claim 1, characterized in that said control device (DR) comprises a piston (24), said piston (24) comprising in particular a shutter (25).

5. System, according to claim 2, characterized in that said watertight chamber (15A) is at least partially delimited by a resilient element (30), such as an elastic membrane.

6. System, according to claim 3, characterized in that said body (12,32) has an upper section (13) and a lower section (14), where the upper section (13) is apt at defining, in union with the conduit (2) in which the control device (DR) is inserted, one or more peripheral passages (11) for the fluid and where the lower section (14) has a central opening (23) and watertight peripheral means (22) which cooperate with said conduit (2), so as that the fluid passing from said peripheral passages (11) of the upper section (13) is only able to flow towards said central opening (23) of the lower portion (14).

7. System, according to claims 5 and 6, characterized in that in said upper section (13) a first chamber (15) is defined, in which said resilient element or elastic membrane (30) is housed, and at the summit of which a closing element (32) is fixed, a surface of said closing element (32) and a surface of said resilient element or elastic membrane (30) delimiting said water tight chamber (15A) having within said reference pressure (Pa).

8. System, according to at least one of the previous claims, characterized in that said resilient element or elastic membrane (30) is stressed by the pressure of the fluid down stream from said passage (18) and is connected to said piston (24), so as that a translation of said piston (24) is obtained being proportional to the difference between the pressure of the fluid (P) downstream from said passage (18) and the pressure (Pa) of the watertight chamber (15A).

9. System, according to claim 4, characterized in that the shutter of said piston (24) is conformed in such a way so as to not be influenced by the pressure (P) of the incoming fluid, i.e. in a way that such pressure (P) of the fluid to be controlled does not substantially contribute to determine the opening of the shutter (25), where in particular, being as that the movement of said shutter (25) or piston (24) is not influenced by the pressure (P) of the incoming fluid, said resilient element or elastic membrane (30) is of reduced dimensions.

10. System, according to claim 6, characterized in that in said lower section (14) a second chamber (20) is defined, to which the fluid flows through said central opening (23), after that its pressure has been controlled.

11. System, according to at least one of the previous claims, characterized in that between said lower section (14) and said upper section (13), in correspondence to said central opening (23), said passage (18) is defined, said shutter (25) operating between said central opening (23) and said passage (18) in a valve like manner, for controlling the pressure of the fluid that has to reach said second chamber (20).

12. System, according to claim 10, characterized in that said second chamber (20) communicates with said first chamber (15) by way of one or more channels (19), defined in at least one connecting element (17) between said lower section (14) and said upper section (13), so as that the pressure of the fluid that has reached said second chamber (20) can be brought back to said resilient element or elastic membrane (30) and therefore compared to the reference pressure of said watertight chamber (15A) for controlling the position of the piston (24) and of the relative shutter (25).

13. System, according to at least one of the previous claims, characterized in that said shutter (25) has at least one lateral opening (26), which faces said passage (18) for the fluid, and at least a lower opening (27), which faces towards said second chamber (20).

14. System, according to at least one of the previous claims, characterized in that said shutter (25) has at least two opposite entrance openings (26), the thrust of the two incoming flows from said two openings (26) being mutually nullified due to the opposite arrangement of the same.

15. System, according to at least one of the previous claims, characterized in that the translation of said piston (24) is contrasted by a spring (36), provided in particular for determining the working point of said control device (DR) and housed in said watertight chamber (15A).

16. System, according to claim 1, characterized in that to said control device (DR) a flow or load controller, housed in particular in said second chamber (20), and/or a filter (FI), housed in particular up stream from said control device (DR) are associated.

17. System, according to at least one of the previous claims, characterized in that said piston (24) is provided with watertight means (29) able to prevent losses of the fluid to the inside of the seat (16) in which said piston (24) is mobile, said watertight means (29') being in particular over-molded in relation to the piston (24').

18. System, according to at least one of the previous claims, characterized in that said resilient element or elastic membrane (30') is over-molded in relation to said piston (24').

19. System, according to at least one of the previous claims, characterized in that said piston (24') has one or more internal passages (30A', 30B', 30C') utilized for the molding of said resilient element or elastic membrane (30') and said watertight means (29').

20. System, according to at least one of the previous claims, characterized in that, with the aims of assembling said control device (DR) in said conduit (2), said body (12,32) of the control device (DR) and the elements associated to it (32,36,35,24) are apt at being sequentially inserted from a same end of said conduit (2), the coupling between said body (12,32) and said elements (32,26,35,24) being in particular provided with snap and/or screw attachments.

21. System, according to claims 1, characterized in that said hydraulic device in which said control device (DR) is integrated or inserted is a solenoid valve (EV), or an anti flood safety device (SA), or a liquid supply pipe of a washing machine, or a union element (2) between two different pipes.

22. System, according to at least one of the previous claims, characterized in that said control device (DR) is jointly used with said flow or load controller (39) with the aim of overcoming the noise of the fluid being conveyed in said conduit (2).

23. System, according to one or more of the previous claims, characterized in that said hydraulic device is connected to a supply network operating at a first pressure and that said control device (DR) provides for bringing the pressure of said fluid to a second pressure, considerably lower than said first pressure, so as that the elements of said hydraulic device that are to be found down stream from said control device (DR) can have resistance or functional characteristics sufficient for operating with said second pressure, i.e. a pressure lower than that which common hydraulic devices have to provide being connected to said supply network and destined to operate with said first pressure.

24. Method for controlling the pressure of a fluid, in particular coming from a hydraulic supply network and destined to a household apparatus, characterized in that the pressure (P) of the fluid to be controlled is brought back to a resilient element (30) which constitutes part of a control chamber (15A) pressurized to a predetermined reference pressure (Pa), where the difference of the pressures on said resilient element (30) is used for varying the amplitude of an opening (18) in which the fluid to be controlled flows, determining a load loss and a reduction of the pressure to an established value (Ps) down stream from said opening (18).
